Europäisches Patentamt

European Patent Office

Office européen des brevets

(11) Veröffentlichungsnummer: **0 220 370**
**B1**

(12) **EUROPÄISCHE PATENTSCHRIFT**

(45) Veröffentlichungstag der Patentschrift:
**14.09.88**

(51) Int. Cl.⁴: **F 41 F  19/02,** F 16 F  9/10

(21) Anmeldenummer: **86107726.1**

(22) Anmeldetag: **06.06.86**

(54) **Rohrbremse.**

(30) Priorität: **19.10.85  DE 3537322**

(43) Veröffentlichungstag der Anmeldung:
**06.05.87 Patentblatt 87/19**

(45) Bekanntmachung des Hinweises auf die Patenterteilung:
**14.09.88 Patentblatt 88/37**

(84) Benannte Vertragsstaaten:
**DE FR GB IT SE**

(56) Entgegenhaltungen:
**DE - A - 3 133 144**
**DE - C - 70 100**
**FR - A - 341 531**

(73) Patentinhaber: **Rheinmetall GmbH,**
**Ulmenstrasse 125 Postfach 6609, D-4000 Düsseldorf**
**(DE)**

(72) Erfinder: **Metz, Josef, Gillbachstrasse 42, D-4040 Neuss**
**(DE)**

(74) Vertreter: **Podszus, Burghart, Dipl.-Phys., Rheinmetall**
**GmbH Ulmenstrasse 125 Postfach 6609,**
**D-4000 Düsseldorf (DE)**

## Beschreibung

Die Erfindung betrifft eine Rohrbremse für ein Geschütz nach dem Oberbegriff des Patentanspruchs 1.

Rohrbremsen sind aus dem «Waffentechnischen Handbuch» der Firma Rheinmetall, 4. Auflage 1977, Seiten 448 - 450 bekannt. Eine Rohrbremse dient zum Abbremsen des nach dem Abfeuern zurücklaufenden Waffenrohres und wird insbesondere auch bei in Türmen lafettierten Waffen, wie insbesondere Panzerkanonen, verwendet. Konventionelle Rohrbremsen haben eine Einbaulänge, die die Rücklauflänge des Waffenrohres wesentlich überschreitet. Die aus dem Turmmaul herausragenden Teile der Rohrbremse sind besonders gefährdet, da sie einem Beschuss oder einer Splitterwirkung ungeschützt ausgesetzt sind.

Teleskopartig ausfahrbare Rohrbremsen der gattungsgemässen Art sind aus der FR-A-341531 oder der DE-C 70100 bekannt. Diese Rohrbremsen enthalten eine innere Kolbenstange und einen die Kolbenstange koaxial umschliessenden und aus dem Gehäuse der Rohrbremse herausziehbaren Zylinder, wobei die Kolbenstange und der Zylinder jeweils mit einem Kolben ausgerüstet sind, die konstante Drosselbohrungen aufweisen. Dadurch sind in Abhängigkeit von der Drosselwirkung der Drosselbohrungen die Kolbenstange und der Zylinder im Ausziehsinne ausfahrbar. Derartige Rohrbremsen weisen jedoch aufgrund der einen konstanten Durchmesser aufweisenden Drosselbohrungen einen wesentlichen Nachteil auf, weil nämlich der Druckverlauf beim Herausziehen der Kolbenstange aufgrund der konstanten Drosselquerschnitte nicht konstant gehalten werden kann. Es ergeben sich einmal beim Beginn des Herausfahrens der Kolbenstange und zum anderen beim Beginn des Herausfahrens des die Kolbenstange umhüllenden Teleskopzylinders jeweils Druckspitzen, die zu einer erhöhten Belastung der Lafette führen.

Aus der DE-A-3133144 geht eine weitere Rohrbremse hervor, die jedoch auf ihrer Achse einen freien Rücklauf vorsieht, nach dessen Ende ein Mitnehmer den eigentlichen Bremskolben für den Bremsvorgang aus dem Bremszylinder zieht. Zur Dämpfung des Aufpralles zu Beginn der Mitnahme sind zusätzliche Federelemente erforderlich.

Die Mitnahme des Bremskolbens erfordert es, den Mitnehmer als Scheibe auf der mit dem Waffenrohr verbundenen massiven zentralen Kolbenstange anzuordnen. Dadurch ist es nicht möglich, derartige als Scheibe ausgebildete Mitnehmer für den Vorlauf einer Rohrbremse einzusetzen, wenn die Kolbenstange als Hohlkolben augebildet ist und innerhalb des Hohlkolbens eine Steuerstange vorgesehen ist.

Der Erfindung liegt die Aufgabe zugrunde, insbesondere für Kanonen mit langem Rücklauf und bei begrenztem Einbauraum eine Rohrbremse anzugeben, die sich nicht nur durch eine extrem kurze Bauweise auszeichnet und die somit selbst noch in dem durch Panzerung geschützten Raum oder aber zumindest hinter einer Waffenblende einbaubar ist, sondern einen definierten Bremsvorgang (gleichbleibende Bremskraft) mit einer in der Übergangsphase bei Beginn der Ausfahrbewegung der mit dem Waffenrohr verbundenen Kolbenstange stossfreien Anlaufbewegung dieser Kolbenstange gewährleistet.

Gelöst wird diese Aufgabe durch die im Kennzeichen des Patentanspruchs 1 angegebenen Merkmale. Der sich anschliessende Unteranspruch nennt eine vorteilhafte Ausgestaltung der Erfindung.

Die Erfindung ermöglicht es in vorteilhafter Weise, dass insbesondere durch die jeweils definierte und veränderliche Drosselquerschnitte aufweisende Steuerstange 15 und Steuerbuchse 15a und einen über einen Zwischenzylinder 13a erfolgenden Druckausgleich sowie durch die kleinere Kolbenfläche 12a gegenüber der Kolbenfläche 13, über dem gesamten Rücklaufweg während des Bremsvorganges der hydraulische Druck konstant gehalten wird. Dadurch erfolgt auch nach Hubende der mit der Waffe verbundenen Kolbenstange 12a der Umschaltvorgang beim Hubbeginn der äusseren Kolbenstange 13 stossfrei. Durch die erfindungsgemässe Lehre wird desweiteren bei dieser teleskopartig in zwei Stufen ausfahrbaren Rohrbremse über dem gesamten Rücklaufweg eine konstante Bremskraft erzielt, die erheblich unter den maximalen Spitzenbelastungen der bekannten und eingangs genannten Rohrbremsen liegt, wodurch in weiter vorteilhafter Weise eine Minimierung der Lafettenbelastungen herbeigeführt wird.

Nach einem Ausgestaltungsmerkmal sind an einer als Hohlzylinder ausgebildeten Kolbenstange Mitnehmer angeordnet, die ausschliesslich nur beim Vorlauf der Kolbenstange wirksam werden können und zusätzlich als Distanzhalter einen Freiraum zwischen dem Kolben 12 und dem Kolben 13 bei einem eingefahrenen Kolben 12a gewährleisten.

Die Erfindung wird nachfolgend unter Bezug auf die 5 Zeichnung näher erläutert. Dabei zeigt:

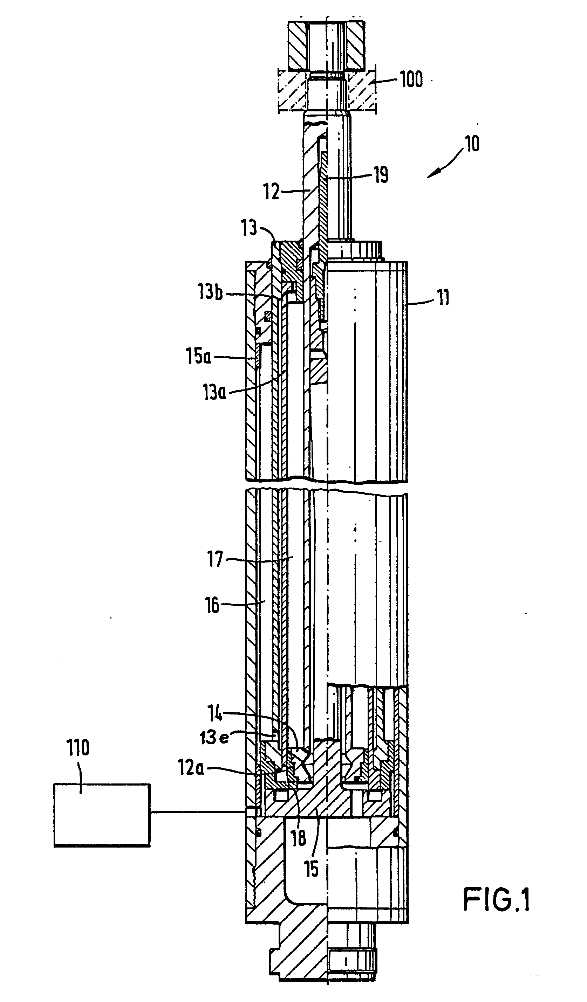

Figur 1: teilweise im Längsschnitt, die Rohrbremse in einem ersten Betriebszustand mit eingefahrenen Kolben;

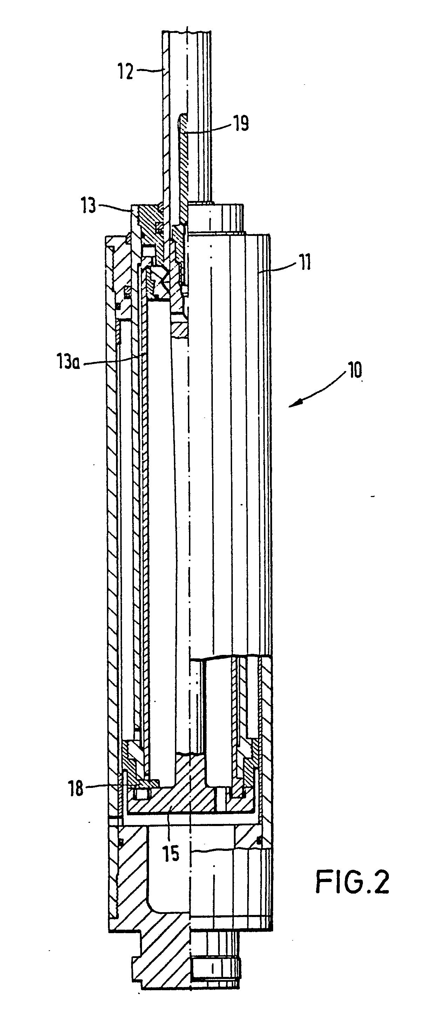

Figur 2: teilweise im Längsschnitt, die Rohrbremse in einem zweiten Betriebszustand mit teilweise ausgefahrenem Kolben;

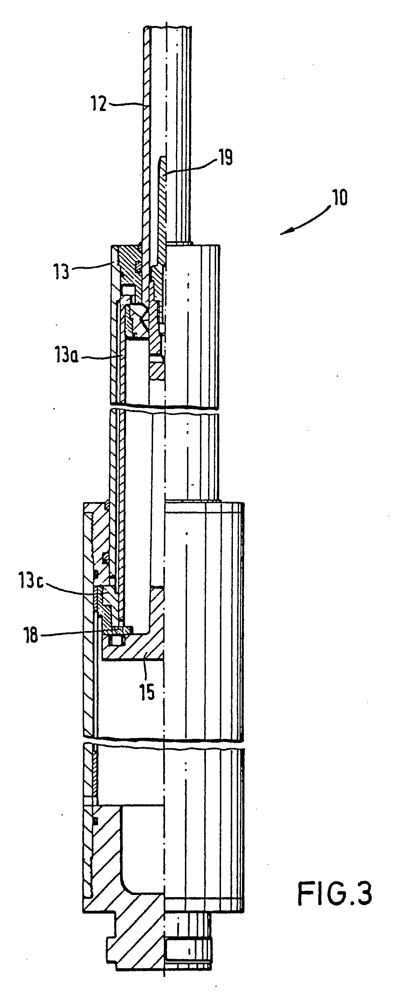

Figur 3: die Rohrbremse, teilweise im Längsschnitt in einem dritten Betriebszustand mit völlig ausgefahrenen Kolben.

Die Rohrbremse 10 umfasst einen Zylinder 11, in dem eine zweistufige Kolbenstange 12, 13 gleitbeweglich eingelagert ist. Die innenliegende Kolbenstange 12 ist mit dem Verschluss 100 der Waffe verbunden. Der Kolben 12a der Kolbenstange 12 hat Durchflusskänale 14, die zu den Drosselquerschnitten innerhalb des Kolbens 12a führen. Eine Steuerstange 15, die an der äusseren Kolbenstange 13 befestigt ist, lagert innerhalb der hohlen Kolbenstange 12. Der Ringspalt, gebildet aus der Bohrung in der Kolbenstange 12 und dem äusseren Durchmesser der Steuerstange 15 hat die Aufgabe, einen definierten und auf dem ersten Rücklaufbereich der Rohrbremse und auf dem ersten Rücklaufbereich der Rohrbremse veränderlichen Drosselquerschnitt darzustellen. Sie umfasst einen Zwischenzylinder 13a mit Bohrungen 13b, der dafür sorgt, dass zwischen einer innenliegenden ersten Druckkammer 17 und einer aussenliegenden zweiten Druckkammer 16 über weitere Bohrungen 13e ein Druckausgleich stattfinden kann, wodurch in der Übergangsphase bei Beginn der Ausfahrbewegung der Kolbenstange 13 eine stossfreie Anlaufbewegung dieser Kolbenstange 13 stattfinden kann. Die Drosselflächen, die bei der Hubbewegung der Kolbenstange 13 wirksam werden, sind in einer Steuerbuchse 15a eingebettet, die ihrerseits im Zylinder 11 eingelagert ist. Der mit der inneren Kolbenstange 12 verbundene Kolben 12 a hat eine kleinere Kolbenfläche, als der Kolben der äusseren Kolbenstange 13. Hierdurch wird erreicht, dass beim Rücklauf zuerst die innenliegende Kolbenstange 12 ausfährt und danach erst die Kolbenstange 13. Dies ergibt eine eindeutige Zuordnung der Drosselquerschnitte zur Rücklaufbewegung der unterschiedlichen Kolbenstangen 12, 13.

Beim Ausfahren der innenliegenden Kolbenstange 12 schliesst der Kolben der Kolbenstange 13 die Drosselquerschnitte in der Steuerbuchse 15a ab. Dadurch kann in dieser Phase des Betriebsblaufs das Hydrauliköl nur noch durch die Durchflusskanäle 14 im Kolben 12a der Kolbenstange 12 abströmen. Um beim Vorlauf der Rohrbremse beide Kolbenstangen 12, 13 wieder definiert in die Ausgangsposition zu bringen, hat die Kolbenstange 13 Mitnehmer 18, durch die beim Einfahren der Kolbenstange 12 auch die Kolbenstange 13 wieder in die Ausgangsposition gebracht wird.

Die Steuerstange 15 ist derart ausgebildet, dass sie nach Hubende der Kolbenstange 12 die Drosselquerschnitte in deren Kolben abschliest. Weiter ist die Steuerstange 15 mit einem Vorlaufhemmdorn 19 ausgestattet, der zur Vorlaufdämpfung bei Vorlaufende dient.

Um eine möglichst kurze Baulänge der Rohrbremse zu erreichen wird weiter die Wärmeausgleichskammer 110 extern angeordnet.

Der Funktionsablauf der Rohrbremse ist wie folgt:

Nach Abgabe des Schusses zieht das Bodenstück 100 die Kolbenstange 12 aus der Rohrbremse heraus. Da das Hydrauliköl in der Rohrbremse in der ersten Phase des Rücklaufs nur gedrosselt über die Öffnung 14 und den Ringspalt zwischen Kolben 12a und Steuerstange 15 abfliessen kann, baut sich in den Druckkammern 16 und 17, die hydraulisch miteinander verbunden sind, ein hydraulischer Druck auf, der aufgrund der grösseren Fläche den Kolben 13c in Endlage hält. Nachdem der Kolben 12a die Kolbenstange 13 erreicht hat, wird diese aus der Rohrbremse herausgezogen. Die Hydraulikflüssigkeit wird dabei über Nuten in der Steuerbuchse 15a gedrosselt abgeführt. In dieser zweiten Phase der Rücklaufbremsung wird die rücklaufende Masse bis zum Stillstand abgebremst. Der Rohrvorholer zieht dann über das Bodenstück die rücklaufende Masse wieder nach vorne. Dabei wird die Kolbenstange 12 wieder in die Rohrbremse hineingeschoben. Wenn der Kolben 12a der Kolbenstange 12 den Mitnehmer 18 erreicht, wird zusätzlich noch die Kolbenstange 13 eingeschoben. Beim Einschieben der beiden Kolbenstangen 12 und 13 wird ein Teil des Hydrauliköls in die hohle Kolbenstange 12 gedrückt. Der restliche überwiegende Teil des Hydrauliköls wird über die Drosselöffnungen 14 bzw. die Nute in der Steuerbuchse 15a wieder in die Druckkammern 16 und 17 gedrückt. Gegen Ende des Vorlaufs der rücklaufenden Masse taucht der Vorlaufhemmdorn 19 in die Hemmdorn kammer der vorlaufenden Kolbenstange 12 ein und verdrängt über eine Drosselöffnung das Hydrauliköl aus der Hemmdornkammer. Dabei wird die Vorlaufgeschwindigkeit der rücklaufenden Masse soweit abgedämpft, dass diese stossarm in die Schlussposition einlaufen kann. Die Rohrbremse hat wieder ihre Ausgangsposition vor dem Schuss erreicht.

**Patentansprüche**

1. Rohrbremse für ein Geschütz mit einem äusseren Zylinder (11) und einem von Hydraulikflüssigkeit beaufschlagten Kolben (12a) sowie einem innerhalb des Zylinders (11) gleitbar liegend gelagert und die Kolbenstange (12) koaxial umgebend sowie als zweite Kolbenstange (13) wirkender Hohlzylinder, wobei zum Aufbringen einer Bremskraft dem durch die Rücklaufbewegung des Waffenrohres auziehbaren Kolben (12a) und der Kolbenstange (13) Drosselstellen zugeordnet sind, die aufgrund der zu verdrängenden Flüssigkeit eine Drosselung der jeweiligen Bewegungen des Kolbens (12a) und der Kolbenstange (13) im Ausziehsinne gestatten, gekennzeichnet durch folgende Merkmale:

a) Zwischen der ersten Kolbenstange (12) und der zweiten Kolbenstange (13) ist ein die erste Kolbenstange (12) koaxial umschliessender Zwischenzylinder (13a) vorgesehen, der mit der zweiten Kolbenstange (13) fest verbunden ist;

b) für einen Druckausgleich zwischen einer ersten, zwischen Kolbenstange (12) und Zwischenzylinder (13a) liegenden Druckkammer (17) und einer zweiten zwischen der Kolbenstange (13) und der Innenwandung des Zylinders (11) liegenden Druckkammer (16) enthält der Zwischenzylinder (13a) Bohrungen (13b) und die Kolbenstange (13) Bohrungen (13e);

c) eine innerhalb der ersten Kolbenstange (12) mit Drosselquerschnitten versehene Steuerstange (15) ist an der äusseren Kolbenstange (13) befestigt, wobei die Drosselquerschnitte definiert veränderlich sind und über Durchflusskanäle (14) des Kolbens (12a) mit der Druckkammer (17) verbunden sind;

d) die Innenwand des Zylinders (11) enthält eine mit Drosselflächen versehene Steuerbuchse (15a), wobei die Drosselflächen während der Hubbewegung der zweiten Kolbenstange (13) definiert gegenüber einem auf der Kolbenstange (13) befestigten Kolben (13c) wirksam werden;

e) der mit der ersten Kolbenstange (12) verbundene Kolben (12a) weist eine kleinere Kolbenfläche als der mit der zweiten Kolbenstange (13) verbundene Kolben (13c) auf.

2. Rohrbremse nach Anspruch 1, dadurch gekennezeichnet, dass die Kolbenstange (13) Mitnehmer (18) trägt, an die der Kolben (12a) der Kolbenstange (12) beim Wiedereinfahren der Kolbenstange (12) anschlägt und auf diese Weise auch die Kolbenstange (13) in ihre Ausgangsposition zurückbewegt.

**Claims**

1. Recoil braking device for a gun, with an outer cylinder (11) and with a piston (12a) subject to hydraulic fluid and with a hollow cylinder mounted horizontally and slidable inside the cylinder (11) and coaxially surrounding the piston rod (12) while for the application of a bracking force throttle points are associated with the piston (12a) extensible by the recoil movement of the barrel and with the piston rod (13) to enable the respective movements of the piston (12a) and of the piston rod (13) to be throttled in the extension direction as a result of the fluid displaced, characterised by the following features:

a) between the first piston rod (12) and the second piston rod (13) an intermediate cylinder (13a) is provided which coaxially surrounds the first piston rod (12) and which is rigidly connected to the second piston rod (13),

b) for pressure equilisation between a first pressure chamber (17), situated between the piston rod (12) and the intermediate cylinder (13a), and a second pressure chamber (16), situated between the piston rod (13) and the inner wall of the cylinder (11), the intermediate cylinder (13a) contains borings (13b) and the piston rod (13) contains borings (13e);

c) a control rod (15) provided inside the piston rod (12) with throttle cross sections being affixed to the outer piston rod (13), the throttle cross sections being alterable in a defined manner and connected through flow channels (14) of the piston (12a) with the pressure chamber (17);

d) the inner wall of the cylinder (11) contains a control bushing (15a), while the throttle surfaces, during the stroke of the second piston rod (13) are operable in a defined manner in relation to a piston (13c) mounted on the piston rod (13);

e) the piston (12a) connected to the first piston rod (12) has a smaller piston face than the piston (13c) connected to the second piston rod (13).

2. Recoil braking device in accordance with Claim 1, characterised by the fact that the piston rod (13) carries an entrainment device (18) on which the piston (12a) of the piston rod (12) makes impact on the re-entry of the piston rod (12) thus returning the piston rod (13) to the initial position.

**Revendications**

1. Frein de recul pour canon comprenant un cylindre externe (11) et un piston (12a) soumis à la sollicitation d'un fluide hydraulique, ainsi qu'un cylindre creux monté de façon coulissante à l'intérieur du cylindre (11) et entourant coaxialement la tige de piston (12) et agissant également en tant que second tige de piston (13), des positions d'étranglement étant associées au piston (12a) qui peut être sorti sous l'effet du mouvement de recul du tube de l'arme et à la tige de piston (13) pour appliquer une force de freinage, lesdites positions d'étranglement autorisant en raison du fluide à refouler un freinage des mouvements respectifs du piston (12a) et de la tige de piston (13) dans le sens de l'extraction, caractérisé par les caractéristiques suivantes:

a) il est prévu entre la première tige de piston (12) et la seconde tige de piston (13) un cylindre intermédiaire (13a) qui entoure coaxialement la première tige de piston (13);

b) le cylindre intermédiaire (13a) comprend des alésages (13b) et la tige de piston (13) comprend des alésages (13e) en vue d'équilibrer la pression entre une première chambre de pression (17) située entre la tige de piston (12) et le cylindre intermédiaire (13a) et une seconde chambre de pression (16) située entre la tige de piston (13) et la paroi interne du cylindre (11);

c) une tige de commande (15) munie de sections d'étranglement à l'intérieur de la première tige de piston (12) est fixée à la tige de piston externe (13), les sections d'étranglement étant ainsi modifiées de façon définie et reliées par l'intermédiaire de canalisations de passage (14) du piston (12a) à la chambre de pression (17);

d) la paroi interne du cylindre contient une douille de commande (15a) munie de surfaces d'étranglement, les surfaces d'étranglement devenant actives de façon définie pendant la course de la seconde tige de piston (13) par rapport à un piston (13c) fixé à la tige de piston (13);

e) le piston (12a) qui est relié à la première tige de piston (12) a une surface plus petite que celle du piston (13c) qui est relié à la seconde tige de piston (13).

2. Frein de recul selon la revendication 1, caractérisé en ce que la tige de piston (13) supporte des éléments d'entraînement (18) contre lesquels le piston (12a) de la tige de piston (12) vient buter lors de la rentrée de la tige de piston (12), la tige de piston (13) étant ainsi également ramenée en arrière vers sa position initiale.

FIG.1

FIG.2

FIG.3